# EUROPEAN PATENT SPECIFICATION

(11) **EP 3 063 392 B1**
(45) Date of publication and mention of the grant of the patent: **05.12.2018**
(21) Application number: 14809709.0
(22) Date of filing: 31.10.2014
(51) Int. Cl.: F02C 9/28, F02C 9/54, F23N 5/18

(54) **CONTROL METHOD AND DEVICE FOR CONTROLLING A GAS TURBINE PLANT FOR ELECTRICAL ENERGY PRODUCTION**
STEUERUNGSVERFAHREN UND VORRICHTUNG ZUR STEUERUNG EINER GASTURBINENANLAGE ZUR STROMERZEUGUNG
PROCÉDÉ DE COMMANDE ET DISPOSITIF POUR COMMANDER UNE INSTALLATION DE TURBINE À GAZ POUR PRODUIRE DE L'ÉNERGIE ÉLECTRIQUE

(30) Priority: 31.10.2013 IT MI20131817
(43) Date of publication of application: 07.09.2016
(73) Proprietor: Ansaldo Energia S.p.A., Genova (IT)
(72) Inventor: COSTA, Paolo, I-16126 Genova (IT)
(74) Representative: Andreotti, Erika
(86) International application number: PCT/IB2014/065745
(87) International publication number: WO 2015/063735

(56) References cited:
- EP-A1- 1 995 867
- EP-A1- 2 522 908
- WO-A1-2009/016665
- US-A1- 2004 011 051

## Description

### TECHNICAL FIELD

The present invention relates to a control method and device for controlling a gas turbine plant for electrical energy production.

### BACKGROUND ART

In recent years, the changing demands of the energy market have forced the operators of electric energy production facilities to always ensure the delivery of high peaks of electrical power.

Known control devices are thus configured to ensure at all times the maximum power delivery, while ensuring the reliability of the plant during the maximum power delivery.

However, known solutions result in a plant performance degradation during stationary operation in which electric power peaks are not required.

In fact, in order to ensure the plant reliability even in the transitional periods in which a significant increase in power output is required, the reference values of the controlled variables are strongly limited. This restriction is necessary during the transition periods in which an increase in the delivered power is required to prevent damage to the system, but it is excessive during periods of stationary operation of the plant. This entails a considerable reduction in the system efficiency during the periods of stationary operation of the plant.

Substantially, known control devices, in order to deal with extraordinary market demands, penalize the efficiency of the plant during stationary operation.

Control device of this known type are, for example, disclosed in documents EP 2522908A1 and EP 1995867A1.

### DISCLOSURE OF INVENTION

Therefore, an object of the present invention is to provide a control method that is free of the drawbacks of the prior art mentioned herein; in particular, an object of the invention is to provide a control method for controlling a gas turbine plant that is able to meet the power demands of the market and, at the same time, increase the plant efficiency compared to the known solutions in a simple and cost-effective manner.

According to such objects, the present invention relates to a control method for controlling a gas turbine plant for electrical energy production according to claim 1.

A further object of the present invention is to provide a control device for controlling a gas turbine plant able to ensure plant flexibility adequate to the market demands and, at the same time, to ensure an increase in the plant efficiency compared to the solutions of the prior art.

According to such objects, the present invention relates to a control method and device for controlling a gas turbine plant for electrical energy production according to claim 13.

### BRIEF DESCRIPTION OF THE DRAWINGS

Further features and advantages of the present invention will become apparent from the following description of an exemplary non-limiting embodiment given purely by way of example and with reference to the figures of the accompanying drawings, in which:
- figure 1 is a schematic view of a gas turbine plant for electrical energy production comprising the control device according to the present invention;
- figure 2 is a schematic block diagram of the control device according to the present invention;
- figure 3 is a schematic block diagram of a first detail of the control device in figure 2;
- figure 4 is a schematic block diagram of a second detail of the control device in figure 2;
- figure 5 is a schematic block diagram of a third detail of the control device in figure 2;
- figure 6 is a schematic block diagram of a fourth detail of the control device in figure 2.

### BEST MODE FOR CARRYING OUT THE INVENTION

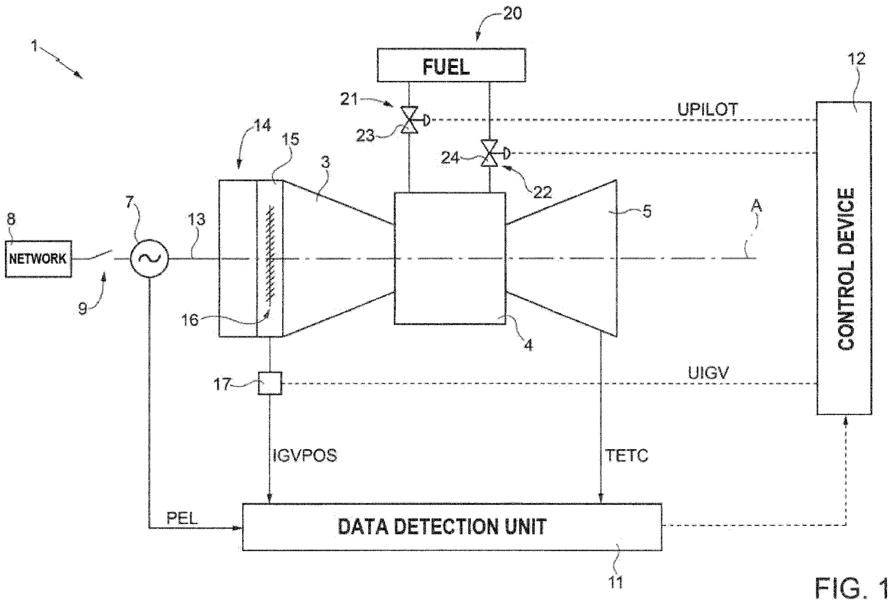

In figure 1, reference numeral 1 indicates a gas turbine plant for electrical energy production comprising a compressor 3, a combustion chamber 4, a gas turbine 5 and a generator 7, which transforms the mechanical power supplied by turbine 5 into electrical power to be supplied to an electrical network 8, connected to generator 7 via a switch 9.

Plant 1 is further provided with a data detection unit 11, which is configured to detect a plurality of parameters of plant 1, and a control device 12.

A variant not shown provides for plant 1 to be of the combined cycle type and including, in addition to the gas turbine 5 and generator 7, also a steam turbine.

The gas turbine 5 extends along a longitudinal axis A and is provided with a shaft 13 (also extending along axis A) to which compressor 3 and generator 7 are also connected.

Compressor 3 is preferably a multistage axial compressor. In particular, compressor 3 extends along axis A and includes an air inlet 14, normally called "air intake", and an inlet stage 15 having variable geometry. The inlet stage 15 comprises a plurality of inlet guide vanes 16 (schematically shown in figure 1), commonly called IGV (Inlet Guide Vane), whose inclination can be changed to adjust an air flow rate sucked by compressor 3 itself.

In particular, the ends of the inlet guide vanes 16 are coupled to an inner ring and an outer ring (not shown for simplicity in the accompanying figures), respectively, which are centered on axis A. The inlet guide vanes 16 are arranged equally spaced from one another.

The inclination of the plurality of inlet guide vanes 16 is adjusted by an actuator 17, which is controlled by the control unit 12 via a UIGV control signal. Actuator 17 is preferably a hydraulic actuator supplied with a working fluid and is connected to the plurality of inlet guide vanes 16 to move them in a plurality of positions between a minimum closure position, in which the inlet guide vanes 16 are oriented such that the air flow entering into compressor 3 is minimum, and a maximum opening position, in which the inlet guide vanes 16 are oriented such that the air flow entering into compressor 3 is maximum.

The combustion chamber 4 preferably is an annular combustion chamber and is substantially toroidal in shape.

The combustion chamber 4 is further provided with a fuel supply circuit 20, which includes at least one pilot supply line 21 and a main power line 22, each of which feeds a respective manifold (not shown for simplicity in the accompanying figures) of the combustion chamber 4 in turn connected to a plurality of burners (also not shown for simplicity).

The pilot supply line 21 is provided with a pilot adjustment valve 23, which is controlled by the control unit 12 using a signal UPILOT, as it will be seen in detail hereafter.

The main supply line 22 is provided with a main adjustment valve 24, which is controlled by the control unit 12.

The data detection unit 11 includes a plurality of sensors (not shown for simplicity in the accompanying figures) configured to detect a plurality of parameters relating to plant 1 to be supplied to the control device 12; in particular, the data detection unit 11 detects at least the following parameters:
- position IGVPOS of the inlet guide vanes 16 of compressor 3;
- power PEL supplied by the gas turbine or by the entire plant 1 if plant 1 is of the combined cycle and single shaft type;
- temperature TETC of the gases at exhaust of the gas turbine 5.
The data detection unit 11 may also include sensors capable of detecting additional parameters to be supplied to the control device 12, such as the calorific value of fuel, composition of the fuel supplied, fuel temperature, intake temperature and pressure of compressor 3, environmental conditions (temperature and atmospheric pressure, relative humidity), gradient of variation of the output power, direction of variation of the output power (increase or decrease in power), etc.

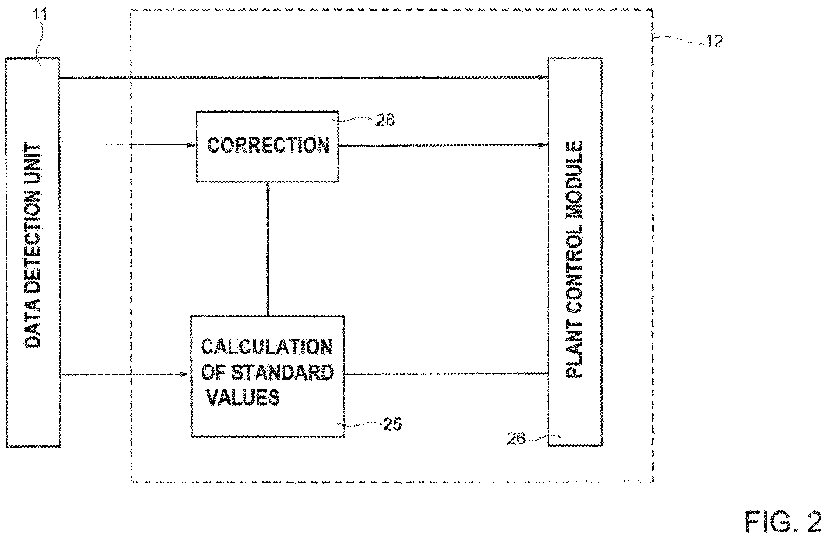

With reference to figure 2, the control unit 12 includes a module for calculating the reference values 25, configured to calculate the reference values for some control parameters of plant 1, a plant control module 26, which is configured to adjust the operation of plant 1 based on the plant parameters values acquired by the data detection units 11 and based on the input reference values, and a correction group 28, configured to correct the reference values calculated by module 25 upon the occurrence of a transient activation condition.

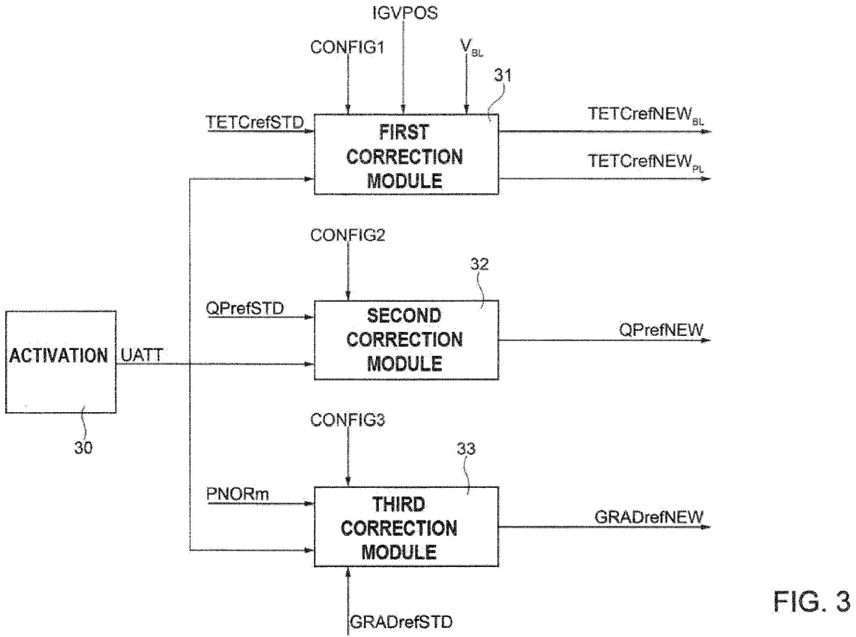

With reference to figure 3, the correction group 28 includes an activation module 30, a first correction module 31, a second correction module 32 and a third correction module 33.

It is understood that the number of correction modules can be variable, depending on the corrective actions to be taken following the detection of a transient activation condition.

The activation module 30 is configured to calculate an activation signal UATT, indicative of a transient activation condition.

In particular, the signal UATT generated is a binary signal with value 0 if the activation condition is not satisfied and value 1 if the activation condition is satisfied.

In particular, the activation module 30 is configured to generate an activation signal UATT equal to 1 when both of the following conditions are met:
∘ a first value (IGVPOS(t1)) of a parameter indicative of the electrical power is lower than a first threshold value in a first instant (t1);
∘ a second value (IGVPOS(t2)) of the parameter indicative of the electrical power is greater than a second threshold value in a second instant (t2) comprised in a time window which follows the first instant (t1).

Wherein the time window has a default width, preferably between 15 and 30 minutes.

If both the conditions listed above are not met, the activation signal UATT generated will be equal to 0.

In the non-limiting example described and shown herein, the indicative value of the electrical power is the position IGVPOS of the inlet guide vanes 16. Generally, the position IGVPOS of the inlet guide vanes 16 is expressed in percentage terms relative to the maximum opening position. If the inlet guide vanes are in minimum closure position, the position IGVPOS detected is equal to 0%; if the inlet guide vanes are in maximum opening position, the IGVPOS position detected is equal to 100%.

The activation module 30 is therefore configured to generate an activation signal UATT equal to 1 if the position of the inlet guide vanes 16 detected in a first time instant IGVPOS (t1) is less than a first threshold value and if the position of the inlet guide vanes 16 detected in at least a second time instant IGVPOS (t2) within the predefined time window is higher than a second threshold value.

In the non-limiting example described and shown herein, the first threshold is equal to 30% and is indicative of approaching of the minimum output load, while the second threshold is equal to 75% and is indicative of approaching the maximum output load.

Therefore, the activation condition is detected if the position IGVPOS of the inlet guide vanes 16 is higher than 75% of opening if, for example, in the preceding 25 minutes the same position IGVPOS was recorded as lower than 30%.

A first variant provides for the activation module to be configured to consider also the pattern of the electrical power PEL. In this case, the activation module is configured to generate an activation signal UATT equal to 1 when the two activation conditions described above are met and the electrical power is increasing.

If the electrical power is decreasing, the activation module generates a signal equal to 0 irrespective of the position of the inlet guide vanes.

A second variation provides for the value indicative of the electrical power is the value of the electrical power PEL detected.

A third variation provides for the value indicative of the electrical power is the value of the normalized electrical power PNORM. Wherein, with detected normalized power value we mean the ratio between the detected current power value PEL and the maximum output power PMAX of plant 1 (PNORM=PEL/PMAX).

The activation signal UATT is transmitted to the first correction module 31, the second correction module 32 and the third correction module 33.

The first correction module 31, the second correction module 32 and the third correction module 33 are selectively activated beforehand.

In this way, different configurations can be implemented. For example, for some types of plants it may be enough to activate only one correction module out of three, while for other types of plants, at least two correction modules out of three or even all correction modules may need to be activated.

Each correction module 31, 32, 33 therefore receives a respective input configuration signal CONFIG1 CONFIG2 CONFIG3, which is equal to 1 if the respective correction module 31, 32, 33 is active or equal to 0 if the respective correction module 31, 32, 33 is inactive.

In detail, the first correction module 31 is configured to change the reference value of the gas turbine exhaust temperature TETCrefSTD calculated by the calculating module 25 for two operating conditions of plant 1:
maximum load condition (also called "base load") in which the power supplied by plant 1 is the maximum output;
partial load condition in which the power supplied by plant 1 is between the maximum output load (base load) and the minimum output load (technical minimum).

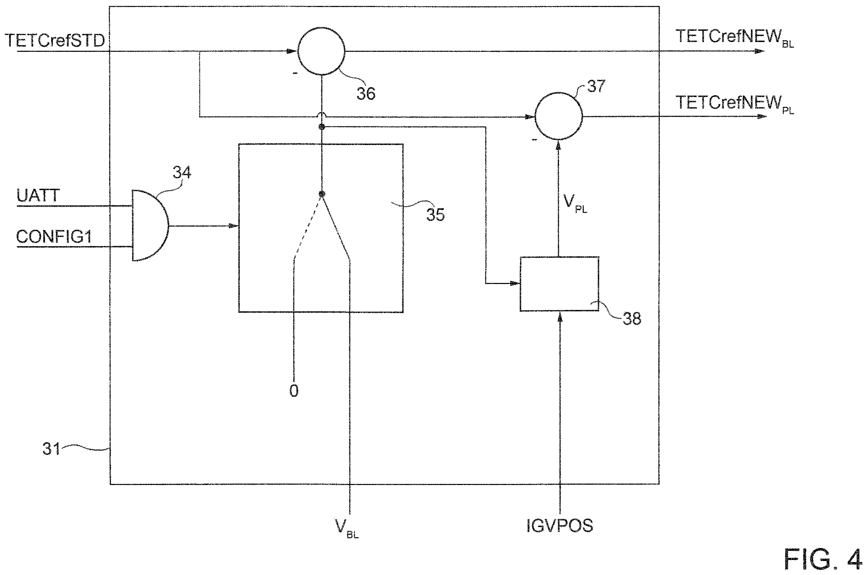

With reference to figure 4, the first correction module 31 is configured to calculate a new reference value of the exhaust temperature at the maximum load TETCsetNEW_{BL} and a new reference value of the exhaust temperature at partial loads TETCsetNEW_{PL} if the activation signal UATT and the configuration signal CONFIG1 are equal to 1.

The new reference value of the exhaust temperature at the maximum load TETCsetNEW_{BL} is basically calculated by subtracting from the reference value of the exhaust temperature TETCrefSTD calculated by the calculating module 25 a first predefined value V_{BL}. The first predefined value V_{BL} is set in advance according to the features of plant 1.

The new reference value of the exhaust temperature at the partial loads TETCsetNEW_{PL} is basically calculated by subtracting from the reference value of the exhaust temperature TETCrefSTD calculated by the calculating module 25 a second value V_{PL}f (IGVPOS). Such a value V_{PL}f (IGVPOS) is calculated as a function of the current position IGVPOS of the inlet guide vanes 16. In addition, the second value V_{PL}f (IGVPOS) is calculated in such a way that the new reference value of the exhaust temperature at partial loads TETCsetNEW_{PL} is at least one grade lower than the new reference value of the exhaust temperature at the maximum load TETCsetNEW_{BL} (TETCsetNEW_{PL} < TETCsetNEW_{BL} -1) when the position IGVPOS of the inlet guide vanes 16 is close to 100%.

With reference to the exemplary diagram shown in figure 4, the activation signal UATT and the configuration signal CONFIG1 are fed to a logic gate 34 of the AND type, which controls a switch 35. Switch 35 supplies an output value equal to 0 if the output of the logic gate 34 is equal to 0, and a value equal to VBL if the logic gate output 34 is equal to 1.

Switch 35 is connected to a subtractor node 36 configured to calculate the new reference value of the exhaust temperature at the maximum load TETCsetNEW_{BL} by subtracting to the standard reference value of the exhaust temperature TETCrefSTD the output value of switch 35.

The new reference value of the exhaust temperature at the partial loads TETCsetNEWPL is basically calculated by subtracting (by a subtractor node 37) from the reference value of the exhaust temperature TETCrefSTD calculated by the calculating module 25 a second value V_{PL}f(IGVPOS) calculated by a module 38. Module 38 is configured to calculate the second value V_{PL}f(IGVPOS) as a function of the current position IGVPOS of the inlet guide vanes 16. In addition, module 38 is configured to calculate the second value V_{PL}f (IGVPOS) in such a way that the new reference value of the exhaust temperature at partial loads TETCsetNEW_{PL} is at least one grade lower than the new reference value of the exhaust temperature at the maximum load TETCsetNEW_{BL} (TETCsetNEW_{PL} < TETCsetNEW_{BL} -1) when the position IGVPOS of the inlet guide vanes 16 is close to 100%.

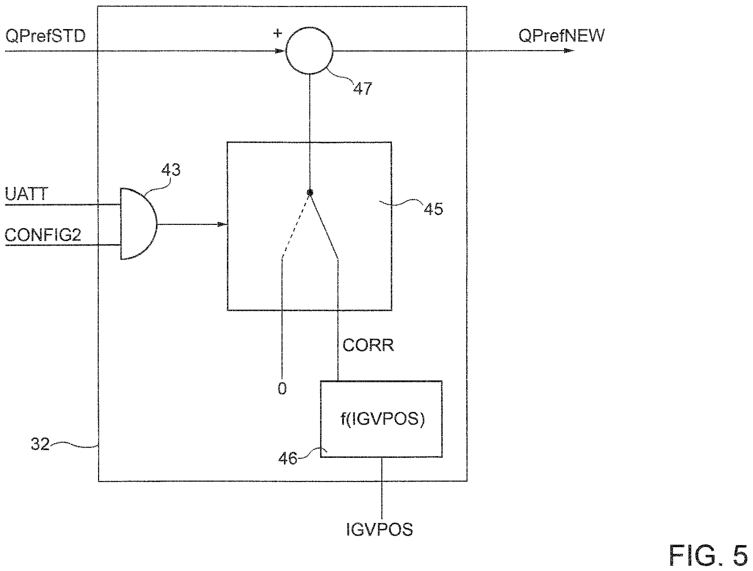

With reference to figure 3, the second correction module 32 is configured to correct a reference value of the pilot flow rate QPrefSTD calculated by the calculating module 25. In particular, the second correction module 32 is configured to calculate a new reference value of the pilot flow rate QPrefNEW as the sum of the reference value of the pilot flow rate QPrefSTD and a correction value CORR calculated on the basis of the current position IGVPOS of the inlet guide vanes 16 of compressor 3. With reference to the exemplary diagram shown in figure 5, the activation signal UATT and the configuration signal CONFIG2 are fed to a logic gate 43 of the AND type, which controls a switch 45. Switch 45 supplies an output value equal to 0 if the output of the logic gate 43 is equal to 0, and a correction value CORR if the logic gate output 43 is equal to 1.

The correction value CORR is calculated by a calculating module 46. The calculating module 46 is configured to supply a correction value CORR based on the current position IGVPOS of the inlet guide vanes 16.

Switch 45 is connected to an adder node 47 configured to calculate the new reference value of the pilot flow rate QPrefNEW by adding to the reference value of the pilot flow rate QPrefSTD the output value of switch 55.

In this way, the pilot gas flow rate supplied to the combustion chamber 4 increases in transient periods in which there is a demand for greater load.

With reference to figure 3, the third correction module 33 is configured to correct the reference value of the electrical power gradient GRADrefSTD calculated by the calculating module 25.

In particular, the third correction module 33 is configured to calculate a new reference value of the electrical power gradient GRADrefNEW which is reduced compared to the reference value of the standard electrical power gradient GRADrefSTD based on the detected normalized power value PNORM.

Wherein with detected normalized electrical power value PNORM we mean the ratio between the detected current power value PEL and the maximum output power PMAX of plant 1 (PNORM=PEL/PMAX).

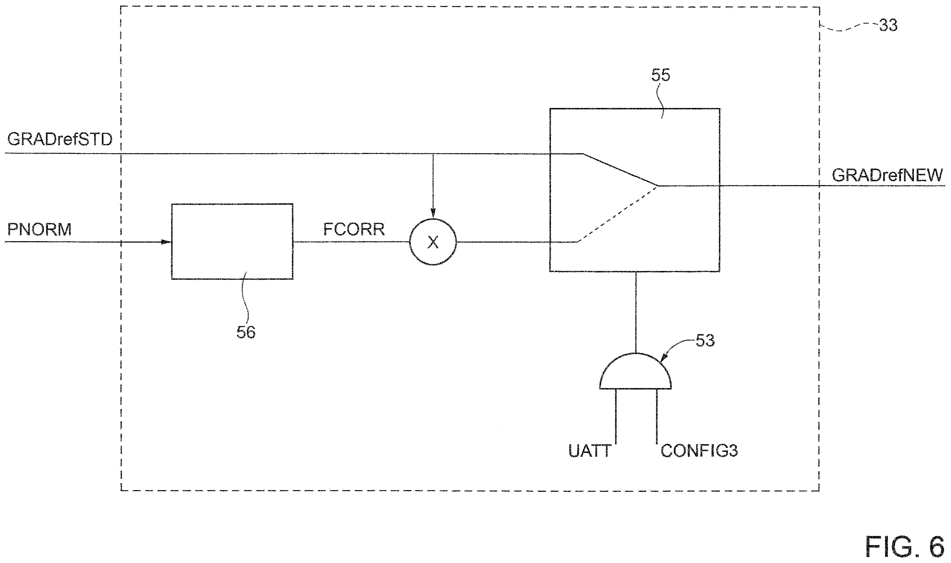

With reference to the exemplary diagram shown in figure 6, the activation signal UATT and the configuration signal CONFIG3 are fed to a logic gate 53 of the AND type, which controls a switch 55. Switch 55 supplies an output value equal to the gradient reference value GRADrefSTD if the output of the logic gate 53 is equal to 0 and the new gradient reference value GRADrefNEW if the output of the logic gate 53 is equal to 1.

The new gradient reference value GRADrefNEW is obtained by multiplying the gradient reference value GRADrefSTD by a correction factor FCORR between 0 and 1.

The correction factor FCORR is calculated by a calculating module 56 based on the detected normalized electrical power value PNORM.

Substantially, the action of correction of the first correction module 31 determines a reduction of the reference value of the exhaust temperature TETCrefSTD both at partial loads and at maximum load, with significant benefits on the combustion stability.

The second correction module 32 makes corrections to the reference value of the pilot flow rate QPrefSTD coping with the behavior differences of plant 1 during transient periods in which there is a demand for power.

The third correction module 33 reduces the gradient of increase of the electrical load up to 50% the more the transient period in which there is a power increases, thereby reducing the impact of a too fast increase on the combustion stability and on the continuous rotor-stator differential expansions.

The correction modules 31, 32 and 33 are deactivated gradually. In other words, the reference values of the various parameters are returned to the initial values in a gradual manner to prevent imbalances in plant 1.

Advantageously, the correction actions made by the first correction module 31, the second module 32 and the third module 33 promptly modify the reference values of the parameters controlled in order to ensure the reliability of plant 1 during the transient periods in which there is a demand for a wide variation of power. In this way, it is possible to prevent setting too limiting reference values as a precaution during the periods of stationary operations of plant 1.

In conclusion, thanks to the present invention it is possible to ensure an operation of plant 1 capable of meeting the needs of flexibility dictated by the market without penalizing the performance thereof. The reference values of the controlled parameters are in fact recalculated as a precaution during the transient periods in which there is a wide variation in power and restored to the original value at the end of the extraordinary conditions of power demands.

Finally, it is clear that the device and the method described herein may be modified and varied without departing from the scope of the appended claims.

## Claims

1. Control method for controlling a gas turbine plant (1) provided with at least a gas turbine (5), a combustion chamber (4), a compressor (3) and a generator (7); the method comprising the steps of:
- setting a plurality of reference values for respective operative parameters of the plant (1);
- detecting an activation condition;
- activating the correction of one or more reference values if the activation condition is detected;
**characterized in that** the step of detecting the activation condition comprises:
- detecting a first value (IGVPOS(t1)) of a parameter indicative of the electrical power lower than a first threshold value in a first instant (t1);
- detecting a second value (IGVPOS(t2)) of the parameter indicative of the electrical power greater than a second threshold value in a second instant (t2) comprised in a time window which follows the first instant (t1).

2. Method according to claim 1, comprising the step of not activating the correction of one or more reference values if the activation condition is not detected.

3. Method according to claim 1 or 2, wherein the time window has a length comprised between 15 and 30 minutes.

4. Method according to anyone of the foregoing claims, wherein the parameter indicative of the electrical power is the position (IGVPOS) of the inlet guide vanes (16) of the compressor (3).

5. Method according to anyone of the foregoing claims, wherein the step of setting a plurality of reference values comprises the step of setting at least a reference value of the exhaust temperature of the gas turbine (TETCrefSTD), a reference value of the pilot gas flow rate (QPrefSTD) and a reference value of the electrical power gradient (GRADrefSTD).

6. Method according to claim 5, wherein the step of activating the correction of one or more reference values comprises the step of correcting at least one between the reference value of the gas turbine exhaust temperature (TETCrefSTD), the reference value of the pilot gas flow rate (QPrefSTD) and the reference value of the electrical power gradient (GRADrefSTD).

7. Method according to claim 5 or 6, wherein the step of activating the correction of one or more reference values comprises the step of decreasing the reference value of the gas turbine exhaust temperature (TETCrefSTD).

8. Method according to claim 6, wherein the step of decreasing the reference value of the gas turbine exhaust temperature (TETCrefSTD) comprises the steps of:
- calculating a new reference value of the gas turbine exhaust temperature at base load (TETCsetNEWBL) which is lower than the reference value of the gas turbine exhaust temperature (TETCrefSTD) and
- calculating a new reference value of the gas turbine exhaust temperature at partial load (TETCsetNEWPL) which is lower than the new reference value of the gas turbine exhaust temperature at base load (TETCsetNEWBL).

9. Method according to any one of claims from 5 to 8, wherein the step of activating the correction of one or more reference values comprises the step of applying a correction (CORR) to the reference value of the pilot gas flow rate (QPrefSTD).

10. Method according to claim 9, wherein the step of applying a correction (CORR) to the reference value of the pilot gas flow rate (QPrefSTD) comprises adding to the reference value of the pilot gas flow rate (QPrefSTD) a correction value (CORR) calculated on the basis of the position (IGVPOS) of the inlet guide vanes (16) of the compressor (3).

11. Method according to any one of claims from 5 to 10, wherein the step of activating the correction of one or more reference values comprises the step of applying a correction factor (FCORR) to the reference value of the electrical power gradient (GRADrefSTD).

12. Method according to claim 11, wherein the correction factor (FCORR) has a value comprised between 0 and 1 defined on the basis of the detected value of normalized power (PNORM).

13. Control device for controlling a gas turbine plant (1) provided with at least one gas turbine (5), a combustion chamber (4),a compressor (3) and a generator (7); the device comprising:
- a calculating module (25) configured to set a plurality of reference values for respective operative parameters of the plant (1);
- an activation module (30) configured to detect an activation condition;
- at least a first correction module (31, 32, 33) configured to activate the correction of one or more reference values if the activation condition is detected by the activation module (30);
**characterized in that** the activation module (30) is configured to detect the activation condition when:
- a first value (IGVPOS(t1)) of a parameter indicative of the electrical power is lower than a first threshold value in a first instant (t1); and
- a second value (IGVPOS(t2)) of the parameter indicative of the electrical power is greater than a second threshold value in a second instant (t2) comprised in a time window which follows the first instant (t1).

14. Device according to claim 13, wherein the first correction module (31, 32, 33) is configured to not activate the correction of one or more reference values if the activation condition is not detected by the activation module (30).

15. Device according to claim 13 or 14, wherein the time window has a length comprised between 15 and 30 minutes.

16. Device according to any one of claims from 13 to 15, wherein the parameter indicative of the electrical power is the position (IGVPOS) of the inlet guide vanes (16) of the compressor (3).

17. Device according to any one of claims from 13 to 16, wherein the calculating module (25) is configured to set at least a reference value of the gas turbine exhaust temperature (TETCrefSTD), a reference value of the pilot gas flow rate (QPrefSTD) and a reference value of the electrical power gradient (GRADrefSTD).

18. Device according to claim 17, wherein the first correction module (31, 32, 33) is configured to correct at least one between the reference value of the gas turbine exhaust temperature (TETCrefSTD), the reference value of the pilot gas flow rate (QPrefSTD) and the reference value of the electrical power gradient (GRADrefSTD).

19. Device according to claim 17 or 18, wherein the first correction module (31) is configured to reduce the reference value of the gas turbine exhaust temperature (TETCrefSTD) .

20. Device according to claim 19, wherein the first correction module (31) is configured to:
- calculating a new reference value of the gas turbine exhaust temperature at base load (TETCsetNEWBL) which is lower than the reference value of the gas turbine exhaust temperature (TETCrefSTD) and
- calculating a new reference value of the gas turbine exhaust temperature at partial load (TETCsetNEWPL) which is lower than the new reference value of the gas turbine exhaust temperature at base load (TETCsetNEWBL).

21. Device according to any one of claims from 17 to 20, comprising a second correction module (32) configured to apply a correction (CORR) to the reference value of the pilot gas flow rate (QPrefSTD).

22. Device according to claim 21, wherein the second correction module (32) is configured to add to the reference value of the pilot gas flow rate (QPrefSTD) a correction value (CORR) calculated on the basis of the position (IGVPOS) of the inlet guide vanes (16) of the compressor (3).

23. Device according to any one of claims from 17 to 22, comprising a third correction module (32) configured to apply a correction factor (FCORR) to the reference value of the electrical power gradient (GRADrefSTD).

24. Device according to claim 23, wherein the correction factor (FCORR) has a value comprised between 0 and 1 defined on the basis of the detected value of normalized power (PNORM).

## Patentansprüche

1. Steuerverfahren zum Steuern einer Gasturbinenanlage (1), die mit mindestens einer Gasturbine (5), einer Brennkammer (4), einem Verdichter (3) und einem Generator (7) ausgestattet ist, welches Verfahren die Schritte enthält:
- Einstellen einer Vielzahl von Referenzwerten für jeweilige Betriebsparameter der Anlage (1);
- Erfassen einer Aktivierungsbedingung;
- Aktivieren der Korrektur eines oder mehrerer Referenzwerte, wenn die Aktivierungsbedingung erfasst wird;
**dadurch gekennzeichnet, dass** der Schritt des Erfassens der Aktivierungsbedingung enthält:
- Erfassen eines ersten Wertes (IGVPOS(t1)) eines Parameters, der die elektrische Leistung anzeigt, der niedriger ist als ein erster Schwellenwert an einem ersten Zeitpunkt (t1);
- Erfassen eines zweiten Wertes (IGVPOS(t2)) des Parameters, der die elektrische Leistung anzeigt, der größer ist als ein zweiter Schwellenwert an einem zweiten Zeitpunkt (t2), der in einem auf den ersten Zeitpunkt (t1) folgenden Zeitfenster enthalten ist.

2. Verfahren nach Anspruch 1, enthaltend den Schritt der Nichtaktivierung der Korrektur eines oder mehrerer Referenzwerte, wenn die Aktivierungsbedingung nicht erfasst wird.

3. Verfahren nach Anspruch 1 oder 2, wobei das Zeitfenster eine Länge hat, die zwischen 15 und 30 Minuten liegt.

4. Verfahren nach einem der vorhergehenden Ansprüche, wobei der die elektrische Leistung anzeigende Parameter die Position (IGVPOS) der Einlassleitschaufeln (16) des Verdichters (3) ist.

5. Verfahren nach einem der vorhergehenden Ansprüche, wobei der Schritt des Einstellens einer Vielzahl von Referenzwerten den Schritt des Einstellens mindestens eines Referenzwerts der Abgastemperatur der Gasturbine (TETCrefSTD), eines Referenzwerts der Pilotgasdurchflussmenge (QPrefSTD) und eines Referenzwerts des elektrischen Leistungsgradienten (GRADrefSTD) umfasst.

6. Verfahren nach Anspruch 5, wobei der Schritt des Aktivierens der Korrektur eines oder mehrerer Referenzwerte den Schritt des Korrigierens mindestens eines des Referenzwerts der Gasturbinenabgastemperatur (TETCrefSTD), des Referenzwerts der Pilotgasdurchflussmenge (QPrefSTD) und des Referenzwerts des elektrischen Leistungsgradienten (GRADrefSTD) umfasst.

7. Verfahren nach Anspruch 5 oder 6, wobei der Schritt des Aktivierens der Korrektur eines oder mehrerer Referenzwerte den Schritt des Verringerns des Referenzwerts der Gasturbinenabgastemperatur (TETCrefSTD) umfasst.

8. Verfahren nach Anspruch 6, wobei der Schritt des Verringerns des Referenzwerts der Gasturbinenabgastemperatur (TETCrefSTD) die Schritte enthält:
- Berechnen eines neuen Referenzwerts der Gasturbinenabgastemperatur bei Grundlast (TETCsetNEWBL), der niedriger ist als der Referenzwert der Gasturbinenabgastemperatur (TETCrefSTD), und
- Berechnen eines neuen Referenzwerts der Gasturbinenabgastemperatur bei Teillast (TETCsetNEWPL), der niedriger ist als der neue Referenzwert der Gasturbinenabgastemperatur bei Grundlast (TETCsetNEWBL).

9. Verfahren nach einem der Ansprüche von 5 bis 8, wobei der Schritt des Aktivierens der Korrektur eines oder mehrerer Referenzwerte den Schritt des Anwendens einer Korrektur (CORR) an dem Referenzwert der Pilotgasdurchflussmenge (QPrefSTD) umfasst.

10. Verfahren nach Anspruch 9, wobei der Schritt des Anwendens einer Korrektur (CORR) an dem Referenzwert der Pilotgasdurchflussmenge (QPrefSTD) das Addieren eines auf der Grundlage der Position (IGVPOS) der Einlassleitschaufeln (16) des Verdichters (3) berechneten Korrekturwerts (CORR) zu dem Referenzwert der Pilotgasdurchflussmenge (QPrefSTD) umfasst.

11. Verfahren nach einem der Ansprüche von 5 bis 10, wobei der Schritt des Aktivierens der Korrektur eines oder mehrerer Referenzwerte den Schritt des Anwendens eines Korrekturfaktors (FCORR) an dem Referenzwert des elektrischen Leistungsgradienten (GRADrefSTD) umfasst.

12. Verfahren nach Anspruch 11, wobei der Korrekturfaktor (FCORR) einen zwischen 0 und 1 liegenden Wert hat, der auf der Grundlage des erfassten Wertes der normalisierten Leistung (PNORM) definiert wird.

13. Steuervorrichtung zum Steuern einer Gasturbinenanlage (1), die mit mindestens einer Gasturbine (5), einer Brennkammer (4), einem Verdichter (3) und einem Generator (7) versehen ist, welche Vorrichtung enthält:
- ein Berechnungsmodul (24), das dafür konfiguriert ist, eine Vielzahl von Referenzwerten für jeweilige Betriebsparameter der Anlage (1) einzustellen;
- ein Aktivierungsmodul (30), das dafür konfiguriert ist, eine Aktivierungsbedingung zu erfassen;
- mindestens ein erstes Korrekturmodul (31, 32, 33), das dafür konfiguriert ist, die Korrektur eines oder mehrerer Referenzwerte zu aktivieren, wenn von dem Aktivierungsmodul (30) die Aktivierungsbedingung erfasst wird;
**dadurch gekennzeichnet, dass** das Aktivierungsmodul (30) dafür konfiguriert ist, die Aktivierungsbedingung zu erfassen, wenn:
- ein erster Wert (IGVPOS(t1)) eines Parameters, der die elektrische Leistung anzeigt, niedriger ist als ein erster Schwellenwert an einem ersten Zeitpunkt (t1); und
- ein zweiter Wert (IGVPOS(t2)) des Parameters, der die elektrische Leistung anzeigt, größer ist als ein zweiter Schwellenwert an einem zweiten Zeitpunkt (t2), der in einem auf den ersten Zeitpunkt (t1) folgenden Zeitfenster enthalten ist.

14. Vorrichtung nach Anspruch 13, wobei das erste Korrekturmodul (31, 32, 33) dafür konfiguriert ist, die Korrektur eines oder mehrerer Referenzwerte nicht zu aktivieren, wenn die Aktivierungsbedingung von dem Aktivierungsmodul (30) nicht erfasst wird.

15. Vorrichtung nach Anspruch 13 oder 14, wobei das Zeitfenster eine Länge hat, die zwischen 15 und 30 Minuten liegt.

16. Vorrichtung nach einem der Ansprüche von 13 bis 15, wobei der die elektrische Leistung anzeigende Parameter die Position (IGVPOS) der Einlassleitschaufeln (16) des Verdichters (3) ist.

17. Vorrichtung nach einem der Ansprüche von 13 bis 16, wobei das Berechnungsmodul (25) dafür konfiguriert ist, mindestens einen Referenzwert der Abgastemperatur der Gasturbine (TETCrefSTD), einen Referenzwert der Pilotgasdurchflussmenge (QPrefSTD) und einen Referenzwert des elektrischen Leistungsgradienten (GRADrefSTD) einzustellen.

18. Vorrichtung nach Anspruch 17, wobei das erste Korrekturmodul (31, 32, 33) dafür konfiguriert ist, mindestens einen des Referenzwerts der Gasturbinenabgastemperatur (TETCrefSTD), des Referenzwerts der Pilotgasdurchflussmenge (QPrefSTD) und des Referenzwerts des elektrischen Leistungsgradienten (GRADrefSTD) zu korrigieren.

19. Vorrichtung nach Anspruch 17 oder 18, wobei das erste Korrekturmodul (31) dafür konfiguriert ist, den Referenzwert der Gasturbinenabgastemperatur (TETCrefSTD) zu verringern.

20. Vorrichtung nach Anspruch 19, wobei das erste Korrekturmodul (31) dafür konfiguriert ist:
- einen neuen Referenzwert der Gasturbinenabgastemperatur bei Grundlast (TETCsetNEWBL), der niedriger ist als der Referenzwert der Gasturbinenabgastemperatur (TETCrefSTD), zu berechnen und
- einen neuen Referenzwert der Gasturbinenabgastemperatur bei Teillast (TETCsetNEWPL), der niedriger ist als der neue Referenzwert der Gasturbinenabgastemperatur bei Grundlast (TETCsetNEWBL), zu berechnen.

21. Vorrichtung nach einem der Ansprüche von 17 bis 20, enthaltend ein zweites Korrekturmodul (32), das dafür konfiguriert ist, eine Korrektur (CORR) an dem Referenzwert der Pilotgasdurchflussmenge (QPrefSTD) anzubringen.

22. Vorrichtung nach Anspruch 21, wobei das zweite Korrekturmodul (32) dafür konfiguriert ist, zu dem Referenzwert der Pilotgasdurchflussmenge (QPrefSTD) einen Korrekturwert (CORR) zu addieren, der auf der Grundlage der Position (IGVPOS) der Einlassleitschaufeln (16) des Verdichters (3) berechnet wird.

23. Vorrichtung nach einem der Ansprüche von 17 bis 22, enthaltend ein drittes Korrekturmodul (32), das dafür konfiguriert ist, einen Korrekturfaktor (FCORR) an dem Referenzwert des elektrischen Leistungsgradienten (GRADrefSTD) anzuwenden.

24. Vorrichtung nach Anspruch 23, wobei der Korrekturfaktor (FCORR) einen zwischen 0 und 1 liegenden Wert hat, der auf der Grundlage des erfassten Wertes der normalisierten Leistung (PNORM) definiert wird.

## Revendications

1. Procédé de commande pour commander une installation de turbine à gaz (1) dotée d'au moins une turbine à gaz (5), une chambre de combustion (4), un compresseur (3) et un générateur (7) ; le procédé comprenant les étapes ci-dessous consistant à :
- définir une pluralité de valeurs de référence pour des paramètres opérationnels respectifs de l'installation (1) ;
- détecter une condition d'activation ;
- activer la correction d'une ou plusieurs valeurs de référence si la condition d'activation est détectée ;
**caractérisé en ce que** :
l'étape de détection de la condition d'activation comprend les étapes ci-dessous consistant à :
- détecter une première valeur (IGVPOS(t1)) d'un paramètre indicatif de la puissance électrique inférieure à une première valeur de seuil au cours d'un premier instant (t1) ;
- détecter une seconde valeur (IGVPOS(t2)) du paramètre indicatif de la puissance électrique supérieure à une seconde valeur de seuil au cours d'un second instant (t2) compris dans une fenêtre temporelle qui suit le premier instant (t1).

2. Procédé selon la revendication 1, comprenant l'étape consistant à ne pas activer la correction d'une ou plusieurs valeurs de référence si la condition d'activation n'est pas détectée.

3. Procédé selon la revendication 1 ou 2, dans lequel la fenêtre temporelle présente une durée comprise entre 15 et 30 minutes.

4. Procédé selon l'une quelconque des revendications précédentes, dans lequel le paramètre indicatif de la puissance électrique est la position (IGVPOS) des aubes directrices d'entrée (16) du compresseur (3).

5. Procédé selon l'une quelconque des revendications précédentes, dans lequel l'étape de définition d'une pluralité de valeurs de référence consiste à définir au moins une valeur de référence de la température d'échappement de turbine à gaz (TETCrefSTD), une valeur de référence du débit de gaz pilote (QPrefSTD) et une valeur de référence du gradient de puissance électrique (GRADrefSTD).

6. Procédé selon la revendication 5, dans lequel l'étape d'activation de la correction d'une ou plusieurs valeurs de référence comprend l'étape consistant à corriger au moins une valeur parmi la valeur de référence de la température d'échappement de turbine à gaz (TETCrefSTD), la valeur de référence du débit de gaz pilote (QPrefSTD) et la valeur de référence du gradient de puissance électrique (GRADrefSTD).

7. Procédé selon la revendication 5 ou 6, dans lequel l'étape d'activation de la correction d'une ou plusieurs valeurs de référence comprend l'étape consistant à diminuer la valeur de référence de la température d'échappement de turbine à gaz (TETCrefSTD).

8. Procédé selon la revendication 6, dans lequel l'étape de diminution de la valeur de référence de la température d'échappement de turbine à gaz (TETCrefSTD) comprend les étapes ci-dessous consistant à :
- calculer une nouvelle valeur de référence de la température d'échappement de turbine à gaz à une charge de base (TETCsetNEWBL) qui est inférieure à la valeur de référence de la température d'échappement de turbine à gaz (TETCrefSTD) ; et
- calculer une nouvelle valeur de référence de la température d'échappement de turbine à gaz à une charge partielle (TETCsetNEWPL) qui est inférieure à la nouvelle valeur de référence de la température d'échappement de turbine à gaz à la charge de base (TETCsetNEWBL).

9. Procédé selon l'une quelconque des revendications 5 à 8, dans lequel l'étape d'activation de la correction d'une ou plusieurs valeurs de référence comprend l'étape consistant à appliquer une correction (CORR) à la valeur de référence du débit de gaz pilote (QPrefSTD).

10. Procédé selon la revendication 9, dans lequel l'étape d'application d'une correction (CORR) à la valeur de référence du débit de gaz pilote (QPrefSTD) comprend l'étape consistant à ajouter, à la valeur de référence du débit de gaz pilote (QPrefSTD), une valeur de correction (CORR) calculée sur la base de la position (IGVPOS) des aubes directrices d'entrée (16) du compresseur (3).

11. Procédé selon l'une quelconque des revendications 5 à 10, dans lequel l'étape d'activation de la correction d'une ou plusieurs valeurs de référence comprend l'étape consistant à appliquer un facteur de correction (FCORR) à la valeur de référence du gradient de puissance électrique (GRADrefSTD).

12. Procédé selon la revendication 11, dans lequel le facteur de correction (FCORR) présente une valeur comprise entre « 0 » et « 1 » définie sur la base de la valeur détectée de puissance normalisée (PNORM).

13. Dispositif de commande destiné à commander une installation de turbine à gaz (1) dotée d'au moins une turbine à gaz (5), une chambre de combustion (4), un compresseur (3) et un générateur (7) ; le dispositif comprenant :
- un module de calcul (25) configuré de manière à définir une pluralité de valeurs de référence pour des paramètres opérationnels respectifs de l'installation (1) ;
- un module d'activation (30) configuré de manière à détecter une condition d'activation ;
- au moins un premier module de correction (31, 32, 33) configuré de manière à activer la correction d'une ou plusieurs valeurs de référence si la condition d'activation est détectée par le module d'activation (30) ;
**caractérisé en ce que** :
le module d'activation (30) est configuré de manière à détecter la condition d'activation lorsque :
- une première valeur (IGVPOS(t1)) d'un paramètre indicatif de la puissance électrique est inférieure à une première valeur de seuil au cours d'un premier instant (t1) ; et
- une seconde valeur (IGVPOS(t2)) du paramètre indicatif de la puissance électrique est supérieure à une seconde valeur de seuil au cours d'un second instant (t2) compris dans une fenêtre temporelle qui suit le premier instant (t1).

14. Dispositif selon la revendication 13, dans lequel le premier module de correction (31, 32, 33) est configuré de manière à ne pas activer la correction d'une ou plusieurs valeurs de référence si la condition d'activation n'est pas détectée par le module d'activation (30).

15. Dispositif selon la revendication 13 ou 14, dans lequel la fenêtre temporelle présente une durée comprise entre 15 et 30 minutes.

16. Dispositif selon l'une quelconque des revendications 13 à 15, dans lequel le paramètre indicatif de la puissance électrique est la position (IGVPOS) des aubes directrices d'entrée (16) du compresseur (3).

17. Dispositif selon l'une quelconque des revendications 13 à 16, dans lequel le module de calcul (25) est configuré de manière à définir au moins une valeur de référence de la température d'échappement de turbine à gaz (TETCrefSTD), une valeur de référence du débit de gaz pilote (QPrefSTD) et une valeur de référence du gradient de puissance électrique (GRADrefSTD).

18. Dispositif selon la revendication 17, dans lequel le premier module de correction (31, 32, 33) est configuré de manière à corriger au moins une valeur parmi la valeur de référence de la température d'échappement de turbine à gaz (TETCrefSTD), la valeur de référence du débit de gaz pilote (QPrefSTD) et la valeur de référence du gradient de puissance électrique (GRADrefSTD).

19. Dispositif selon la revendication 17 ou 18, dans lequel le premier module de correction (31) est configuré de manière à diminuer la valeur de référence de la température d'échappement de turbine à gaz (TETCrefSTD).

20. Dispositif selon la revendication 19, dans lequel le premier module de correction (31) est configuré de manière à :
- calculer une nouvelle valeur de référence de la température d'échappement de turbine à gaz à une charge de base (TETCsetNEWBL) qui est inférieure à la valeur de référence de la température d'échappement de turbine à gaz (TETCrefSTD) ; et
- calculer une nouvelle valeur de référence de la température d'échappement de turbine à gaz à une charge partielle (TETCsetNEWPL) qui est inférieure à la nouvelle valeur de référence de la température d'échappement de turbine à gaz à la charge de base (TETCsetNEWBL).

21. Dispositif selon l'une quelconque des revendications 17 à 20, comprenant un deuxième module de correction (32) configuré de manière à appliquer une correction (CORR) à la valeur de référence du débit de gaz pilote (QPrefSTD).

22. Dispositif selon la revendication 21, dans lequel le deuxième module de correction (32) est configuré de manière à ajouter, à la valeur de référence du débit de gaz pilote (QPrefSTD), une valeur de correction (CORR) calculée sur la base de la position (IGVPOS) des aubes directrices d'entrée (16) du compresseur (3).

23. Dispositif selon l'une quelconque des revendications 17 à 22, comprenant un troisième module de correction (32) configuré de manière à appliquer un facteur de correction (FCORR) à la valeur de référence du gradient de puissance électrique (GRADrefSTD).

24. Dispositif selon la revendication 23, dans lequel le facteur de correction (FCORR) présente une valeur comprise entre « 0 » et « 1 » définie sur la base de la valeur détectée de puissance normalisée (PNORM).
